# EUROPEAN PATENT APPLICATION

(11) **EP 2 000 971 A2**
(43) Date of publication of application: **10.12.2008**
(21) Application number: 06843187.3
(22) Date of filing: 25.12.2006
(51) Int. Cl.: G06Q 40/00

(54) **TRADING SYSTEM**

(30) Priority: 09.03.2006 JP 2006064907
(71) Applicant: Fitech Laboratories, Inc., Tokyo 104-0033 (JP)
(72) Inventor: MATSUSHIMA, Toshiyuki, Tokyo 1040033 (JP)
(74) Representative: Betten & Resch
(86) International application number: PCT/JP2006/325784
(87) International publication number: WO 2007/102268

(57) **Abstract**

An object of the invention is to provide a trading system used by agents or the like when placing orders in a trading market system. The trading system has order receiving means; order ID assigning means; event monitoring means for monitoring at least one event and determining whether order conditions have been met; order issuing means for issuing, in the trading market system, order attributes defined on the basis of order attributes; and order attribute definition means for performing processing on the basis of objects when undefined order attributes are included, and returning the results. The order issuing means transfers an object ID included in the undefined order attributes; the order attribute definition means processes the object and returns the results to the order issuing means; and the order issuing means receives the processed results, converts the portion of the undefined order attributes to the processed results, and converts the order attributes to defined order attributes, whereupon the defined order attributes are issued to the trading market system.

## Description

### TECHNICAL FIELD

The present invention relates to a trading system used by agents or the like when placing purchase orders for a variety of financial products such as stocks, bonds, bills, futures, and options, or other products, in a trading market system.

### BACKGROUND ART

On-line trading of financial products and other products on the Internet has become popular, with growing interest in particular in the trading of a variety of financial products such as stocks, bonds, bills, futures, and options. Financial products and other products are bought and sold through orders handled by agents in trading systems for such products. For example, investors place orders for shares on the Tokyo Stock Exchange system through the trading systems of brokerage firms who act as the agents.

The spread of on-line trading has resulted in investor demand for the placement of orders with various specified conditions. In response, agents have given investors the ability to control the risk of price fluctuations by a system which permits orders with complex conditions to be placed through a combination of, for example, limit orders (orders specifying a brand, price, and quantity), market orders (orders specifying only the brand and quantity, not the price), stop limit orders (orders to place a purchase order if the price of securities or the like rises above a specified price and to place a sell order if the price falls below a specified price), conditional orders (orders to place another order depending on when a certain order is executed), timed orders (orders placed when a time or date-related condition is met), and one-cancels-other orders (orders for two orders, wherein one order is executed, resulting in the cancellation of another order).

Although the ability to use these various types of orders is extremely beneficial to investors, when placing their orders, investors must ensure that the order conditions (conditions specifying when order attributes are to be placed in a trading market) and order details (conditions specifying the order attributes: which brands are to be sold or bought in which quantities at which prices) are unambiguous. Investors must therefore specify specific order details (order conditions and order attributes) from time to time while monitoring market conditions, but the need for investors to constantly monitor the market can be a burden.

The Patent Document 1 below discloses a trading system in which the order conditions and order attributes both include parameters that are determined after order details referred to as variables have been specified, specific order conditions and order attributes are automatically determined simultaneously when the variables are determined by market conditions, and orders are placed on the trading system with the order attributes that have been determined when the order conditions have thereby been met. The trading system disclosed in Patent Document 1 is also described in the Non-Patent Document 1 below.

Non-Patent Document 2 discloses a system capable of implementing a process similar to the trading system disclosed in Patent Document 1 and Non-Patent Document 1. The trading system disclosed in Non-Patent Document 2 (automated ordering system: program trading system) has been used primarily in the United States since the 1980's. Particularly since the second half of the 1990's, when the Internet became so popular, general investors have made broad use of systems in which stock price information is monitored by real-time current price field, and when a condition such as a future indeterminate stock price is met, order attributes are automatically calculated by the program using variables bound to those values, and orders are issued. A typical example of such a system is the TradeStation, which is commercially available from Omega Research and is an extremely user-friendly system in which automated orders based on flexible rule-making using an automated order-dedicated program language can be described by even general investors with simple notation. Several years later, on-line trade systems executing some of the functions of TradeStation have been developed even in Japan (Non-Patent Document 2).

Patent Document 1: JP-A 2004-54643

Non-Patent Document 1: kabu.dom Securities Co., Ltd., [online] Internet URL:http://kabu.com/company/pressrelease/20051226.asp
Non-Patent Document 2: Samuel Knight Tennis, *Ask Mr. EasyLanguage*, (US, Traders Press, Inc. (1999))

### DISCLOSURE OF THE INVENTION

### PROBLEMS TO BE SOLVED BY THE INVENTION

An advantage of the trading systems disclosed by the above Patent Document 1, Non-Patent Document 1, and Non-Patent Document 2 is that variables are included in both the order conditions and order attributes, the order attributes are thereby determined by the determination of numerical values for the variables when the order conditions are evaluated rather than having specific order conditions and order attributes determined when the order details are specified, and the determination of the specific order details (order conditions and order attributes) thus allows investors to undertake trades in response to market conditions.

However, because numerical values for the variables included in the order conditions are determined, and the order attributes are thereby simultaneously determined accordingly (Patent Document 1 sections (0045), (0056), (0061), (0066), etc.), there is usually a time difference of from dozens of milliseconds to several seconds from the time the numerical values for the variables are established until the order conditions are actually met and the order with the defined order attributes is taken into the trading market system, precluding precise responses to market changes in the meantime.

As described in Patent Document 1, for example, when the order details are "when the current price is starting price + 10 yen, buy limit price at starting price + 20 yen" (in this case, "starting price + 10 yen" is the order condition, "buy limit price at starting price + 20 yen" is the order attribute, and "starting price" is the variable), the order condition and order attribute are determined with specific values when the variable "starting price" is set. For example, when the "starting price" is 500 yen, the specific order details are determined with an order condition of "510 yen" and an order attribute of "buy at 520 yen."

So, the order remains fixed with an order attribute of "buy at 520 yen" until the current price of a brand specified by the investor is 510 yen, and the order attributes will not be modified, despite even major changes or the like in the market, from the time the variables are set until the order conditions are met. A resulting problem is that, from the time the variables are determined until the order conditions are met, investors must assume the risk of not being able to respond with any flexibility to market changes such as price fluctuations.

The trading system disclosed in Non-Patent Document 2 can be used for more complex processing than the trading systems disclosed in Patent Document 1 and Non-Patent Document 1, but the antecedent and consequent are brought about within the same scope, and the consequent is therefore immediately defined by the processing of the antecedent. In other words, orders having indeterminate conditions cannot be processed, and the same time lag noted above is inevitable.

The above example can be modified to "when the current price is starting price + 10 yen, buy limit price at (starting price + current price) ÷ 2 + 10 yen" so as to address market changes. In this case, the value of the current price used to calculate the "(starting price + current price) ÷ 2 + 10 yen" that determines the limit price is preferably as close as possible to the value at the point in time when the order is taken into the trading market system and the transaction process is carried out, but when the prior art described above is employed, it is possible that this will be too late with the current price at the point in time when the "current price is starting price + 10 yen."

Attempts to minimize such risk are necessarily limited to calculations or variables with which such time lag-induced risk is not likely to occur, and investors cannot avail themselves of more diverse methods for calculating order attributes. In other words, investors are in need of more user-friendly options.

### MEANS USED TO SOLVE THE ABOVE-MENTIONED PROBLEMS

The inventors of the present application discovered a trading system in which order attributes are not defined simultaneously by the determination of variables in ordering conditions as in the past, but when order conditions have been met, order definition objects expressing a method for calculating and processing order attributes, a data retrieval method, or data for defining order attributes are automatically generated or are selected from among a plurality of order definition objects prepared in advance, and the order definition objects are calculated and processed, so as to define the order attributes, as close as possible to the point in time at which the orders are taken into the trading market system.

The invention according to a first aspect is A trading system for receiving buy and sell orders from investor terminals used by investors and placing the orders in a trading market system used by trading markets, said trading system comprising:order receiving means for receiving buy and sell orders from the investor terminals; means for storing order attributes of the received orders in order attribute memory means and for storing conditions, if the conditions are included in the orders, in condition memory means; event monitoring means for monitoring at least one event among current price events, take-effect events, and time events, and determining whether conditions stored in the condition memory means have been met; order issuing means for issuing, in the trading market system, order attributes defined on the basis of order attributes stored in the order attribute means for orders not including the conditions or orders that meet conditions in the orders; and order attribute definition means for processing order definition objects for which are described order attribute-defining processes stored in object memory means when undefined order attributes are included in orders issued by the order issuing means, and returning the results to the order issuing means, wherein the order issuing means transfers to the order attribute definition means the order definition object or an object ID for identifying the order definition object included in at least the undefined order attributes; the order attribute definition means processes the order definition object obtained from the object memory means based on the given order definition object or object ID and returns the results to the order issuing means; and the order issuing means receives the processed order definition object results and converts the undefined order attributes to the processed results, so that the order attributes that have been defined through the conversion of the order attributes to defined order attributes are issued to the trading market system.

A structure such as in the invention allows orders to be issued in a trading market system by defining undefined order attributes immediately before orders are issued. This allows order conditions and order attributes to be simultaneously defined as in the past, with a minimal time lag from that point until the order is actually issued, and enables flexible response to market changes such as price fluctuations. The lack of risk due to such time lag allows order definition objects for diverse calculation and processing of order attributes to be used, and enables greater diversification of methods for calculating order attributes.

The invention according to a second aspect is a trading system wherein the order ID assignment means specifies conditional order attributes and conditions based on identifiers included in the order.

Order attributes and order conditions must be reliably specified. Specification based on identifiers included in orders, as in the invention, enables reliable processing.

The invention according to a third aspect is a trading system wherein the order issuing means determines that the order attributes are undefined when the order attributes include the object ID or order definition object, and determines that the order attributes are defined when the object ID or order definition object are not included.

The object ID is data identifying order definition objects. The inclusion of order definition objects in the order attributes indicates that some method of calculation must be used to calculate a value. Thus, order attributes are determined to be undefined when an object ID is included, and order attributes are determined to be defined when not included.

The invention according to a fourth aspect is a trading system wherein the object is data or a code comprising data and one or more process commands.

The object can be established as needed, in the form of data or a processing command, or a code composed of a combination thereof (including programs, modules, or the like), for simple to complex methods of calculation. Investors can themselves combine and record the code to freely customize them.

The invention according to a fifth aspect is a trading system for receiving buy and sell orders from investor terminals used by investors and placing the orders in a trading market system used by trading markets, wherein the trading system comprises order receiving means for receiving buy and sell orders from the investor terminals; order ID assignment means for assigning order ID's which are data specifying order elements for various order elements forming the buy and sell orders, storing, in order attribute memory means, information indicating conditions and order attributes of the order elements in a manner matched with the order ID's, and storing the conditions, when conditions are included in the order elements, in condition memory means in a manner matched with the order ID's; event monitoring means for monitoring at least one event among current price events, executed events, and time events, and storing data, if any, to the effect that conditions stored in the condition memory means have been met; order issuing means for extracting order attributes stored in the order attribute memory means based on the order ID's for orders with stored data indicating that conditions in the orders have been met or orders having no data indicating conditions in the order attribute memory means, and issuing defined order attributes in the trading market system; and order attribute definition means for receiving the object ID's from the order issuing means when object ID's are included in the order attributes for orders issued by the order issuing means, processing order definition objects corresponding to the object ID's, and returning the results to the order issuing means, wherein the order issuing means determines whether an object ID is included in the order attributes corresponding to the order ID before an order is issued, issues defined order attributes as such in the trading market system when no object ID is included, and when an object ID is included, transfers at least the object ID to the order attribute definition means, receives the processed results for the order definition object corresponding to the object ID from the order attribute definition means, and converts the undefined order attributes to the processed results, so that the order attributes that have been defined through the conversion to defined order attributes are issued to the trading market system.

The trading system according to the first aspect can be composed as the invention.

The invention according to a sixth aspect is a trading method for performing a process by a computer which receives buying or selling orders from an investor terminal used by an investor and places the orders on a trading market system used by trading markets, wherein the computer performing the trading method receives buy and sell orders from the investor terminal, stores the order attributes of the orders in order attribute memory means, and stores conditions in condition memory means if the conditions are included in the orders; determines, when no condition are included in the orders, whether the order attributes stored in the order attribute memory means in the trading market system are defined order attributes; issues orders with the defined order attributes to the trading market system when the order attributes are defined; processes an order definition object specified by undefined order attributes, when the order attributes are undefined, to convert the undefined component of the undefined order attributes to the processed results for the order definition object, so that order attributes that have been defined through the conversion to defined order attributes are issued to the trading market system; monitors at least one event among current price events, take-effect events, and time events, and determine whether conditions stored in the condition memory means have been met, determines whether order attributes stored in the order attribute memory means for orders meeting all conditions in the order are defined order attributes; issues orders with the defined order attributes in the trading market system when the order attributes are defined; and process an order definition object specified by undefined order attributes, when the order attributes are undefined, to convert the undefined component of the undefined order attributes to the processed results for the order definition object, so that order attributes that have been defined through the conversion to defined order attributes are issued to the trading market system.

The trading system according to the first aspect can be realized by a process in accordance with the method of the invention when run by a computer such as a server.

The invention according to a seventh aspect is a trading market system for receiving orders with undefined order attributes from a trading system in which buy and sell orders are received from investor terminals used by investors, wherein the trading market system comprising: order attribute definition means for processing order definition objects for which are described processes related to undefined order attributes included in the order attributes, and converting the undefined order attributes to defined order attributes through conversion to the processed results; and means for buying and selling by matching the defined order attributes with the defined order attributes of other orders.

The invention according to an eight aspect is a trading market system for receiving orders with undefined order attributes from a trading system in which buy and sell orders are received from investor terminals used by investors, wherein the trading market system is comprising: object memory means for storing order definition objects, for which are described processes related to undefined order attributes included in the order attributes, in a manner matched with object ID's; means for receiving undefined order attributes from the trading system; order attribute definition means for processing order definition objects corresponding to object ID's based on the object ID's included in the undefined order attributes, and converting the undefined order attributes to defined order attributes through conversion to the processed results; and means for buying and selling by matching the defined order attributes with the defined order attributes of other orders.

Only defined orders (order attributes) are received in conventional trading market systems. A system such as the Tokyo Stock Exchange, for example, receives only orders in which the buy or sell category, brand being bought or sold, and buy or sell price (or marketing) have been defined. Defined orders must therefore be issued when orders from a trading system used by agents such as a brokerage firm are placed in a trading market system. However, there is a slight time lag from the time the order is placed until the order is actually received in the trading market system, and the market has changed in the meantime. As investors must assume the lost opportunities or risk of changes during such time lags, the order details (order attributes) are preferably determined as much as possible immediately before being matched in the trading market system. Thus, unlike the prior art, order attributes are not defined in the above invention at the point in time when the order conditions are defined, but the order attributes are defined immediately before the order is issued. However, even so, there is still an unavoidable time lag, as well as the associated risk, from the time the order attributes are defined in the trading system until the order is accepted into the trading market system, although the time lag is shorter than in the prior art. In the present invention, the risk of this time lag is minimized through a trading market system in which undefined order attributes are issued from a trading system, and the order attributes are defined immediately before being matched in a trading market system such as the Tokyo Stock Exchange.

### EFFECT OF THE INVENTION

Creating a trading system in which, as in the present invention, order attributes are defined immediately before orders that have met order conditions are issued in a trading market system eliminates the risk of not being able to respond in a flexible manner to market changes such as price fluctuations from the time order attributes such as limit prices are determined until the order is issued in the trading market. Investors can thus make investments with greater risk control than in the past against sudden market changes.

As there is less lost opportunity or risk due to time lags, a variety of calculating methods based on order definition objects can be established when order attributes are determined, resulting in diverse methods for calculating order attributes and greater investor convenience.

### BRIEF DESCRIPTION OF THE DRAWINGS

FIG. 1 is a schematic view of the trading system according to the invention;
FIG. 2 is a flowchart showing an example of a process for the trading system according to the invention;
FIG. 3 is an example of order attribute memory means;
FIG. 4 is an example of condition memory means;
FIG. 5 is an example of object memory means;
FIG. 6 is an example of condition memory means in which condition ID "100" is the monitoring status;
FIG. 7 is an example of code for indicating order details;
FIG. 8 is a schematic showing the order hierarchy;
FIG. 9 is an example of order attribute memory means after order ID "2" has been executed;
FIG. 10 is an example of condition memory means in which condition ID "101" and condition ID "103" are the monitoring status;
FIG. 11 is an example of condition memory means in which condition ID "101" has been established;
FIG. 12 is an example of order attribute memory means before the price is defined for order ID "4";
FIG. 13 is an example of order attribute memory means after the price is defined for order ID "4";
FIG. 14 is an example of condition memory means in which condition ID "102" is the monitoring status;
FIG. 15 is an example of condition memory means in which condition ID "102" has been established and condition ID "103" and condition ID "104" have been cancelled; and
FIG. 16 is an example of condition memory means in which condition ID "4" has been executed and condition ID "5" has been cancelled.

### DESCRIPTION OF THE NUMERICAL SYMBOLS

- 1:: Trading system
- 2:: Trading market system
- 3:: Investor terminal
- 4:: Order receiving means
- 5:: Order ID assignment means
- 6:: Order attribute memory means
- 7:: Condition memory means
- 8:: Even monitoring means
- 9:: Object memory means
- 10:: Order issuing means
- 11:: Order attribute definition means

### BEST MODE FOR CARRYING OUT THE INVENTION

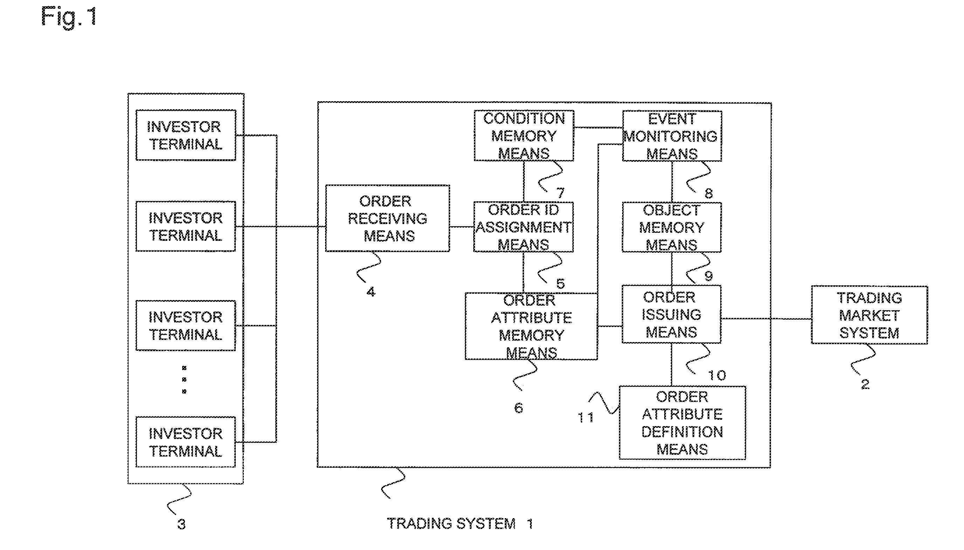

FIG. 1 is a schematic view of the trading system according to the invention. The trading system 1 is a system which agents of brokerage firms and the like use to relay buy and sell orders to trading markets when trading financial products or other products. The trading system 1 allows data to be transmitted between computers used by investors (investor terminals 3) and a trading market system 2 which a trading market uses as the site for trading financial and other products. Examples of trading markets include pre-designated trading locations such as the Tokyo Stock Exchange, and agents of brokerage firms or the like.

The trading system 1 may be one or a plurality of servers for controlling the placement of buy and sell orders received from investor terminals 3 to the trading market system 2. The servers have at least a computing device such as a CPU for running program computing processes, a memory device such as a hard disc or RAM for storing data, and a communications device for transmitting the processed results from the computing device or the data stored in the memory device through a network such as the Internet or LAN. The means (such as programs or modules) for processing the various functions (various means) by which the trading system 1 is run on a computer are read into the computing device to run the processes. When the data stored in the memory devices is used for the processes of the various means, the relevant data is read from the relevant memory device, and the read data is used as needed for the processes of the computing device. The servers may also have an input device such as a keyboard or mouse, and a display device such as a monitor.

The trading system 1 has order receiving means 4, order ID assignment means 5, condition memory means 7, order attribute memory means 6, event monitoring means 8, order issuing means 10, order attribute definition means 11, and object memory means 9.

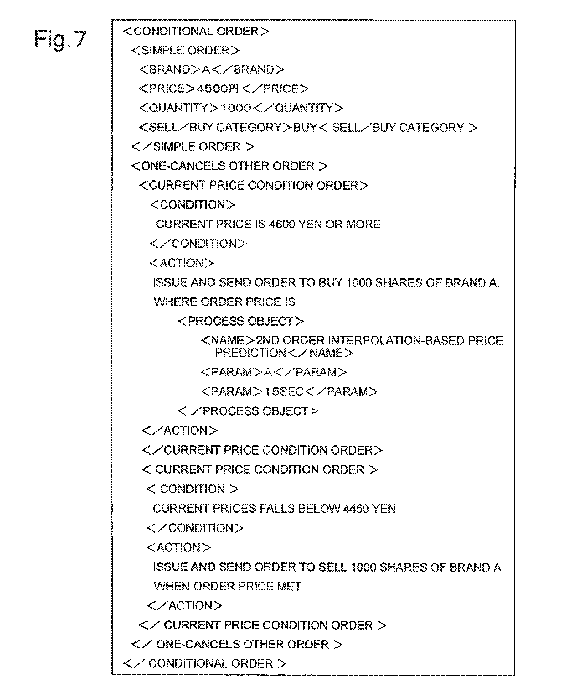

The order receiving means 4 is a means for receiving buy and sell order data from investor terminals 3 over a network. The buy and sell order data may include types of orders, conditions such as for issuing or canceling orders, and order attributes, but conditions may also be left out. FIG. 7 illustrates an example of buy and sell order data received from investor terminals 3. In FIG. 7, XML notation is used to represent the order hierarchy in a manner that can be readily understood, but the invention is not limited to this method.

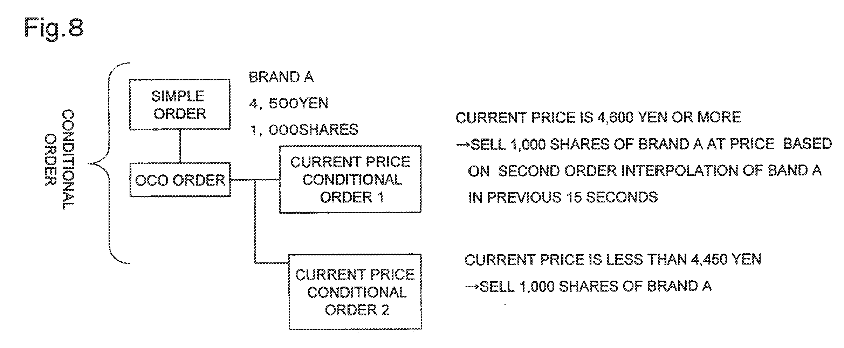

The example of the buy and sell order in FIG. 7 is a conditional order composed of two elements (order elements). The first order element is a simple order, which is an order to buy 1,000 shares of brand A at 4,500 yen. The second order element is a one-cancels-other order, which is itself composed of two order elements. Each of the order elements are current price condition orders, where the first order is an order to sell 1,000 shares of brand A, when the current price of brand A is at or over 4,600 yen, at a price calculated by second order interpolation based on the price of brand A in the previous 15 seconds, and the other order is an order to sell 1,000 shares of brand A when the current price of brand A falls below 4,450 yen. When either of these two selling orders is executed, the other order is cancelled. The buy and sell orders received by the trading system 1 of the invention thus have a hierarchy (the hierarchy may also be just one level). FIG. 8 schematically illustrates the hierarchy of the buy and sell order in FIG. 7. Buy and sell orders processed by the trading system 1 of the invention are thus hierarchical. Orders are thus recursively processed by the trading system 1.

The order ID assignment means 5 is a means for sequentially assigning order ID's, starting with the higher ranking order, for various order elements forming the buy and sell orders that are received by the order receiving means 4, and storing the order attributes in the order attribute memory means 6 (described below). This is also a means for storing conditions in the condition memory means 7 (described below) if the order has any conditions. At this time, when the data for a buying or selling order such as a conditional order or one-cancels-other order includes a plurality of buy and sell orders as shown in FIG. 7, for example, the various order ID's may be assigned and stored in the order attribute memory means 6. The order attribute memory means 6 and condition memory means 7 may also be integrated to allow the order attributes and conditions to be collectively stored.

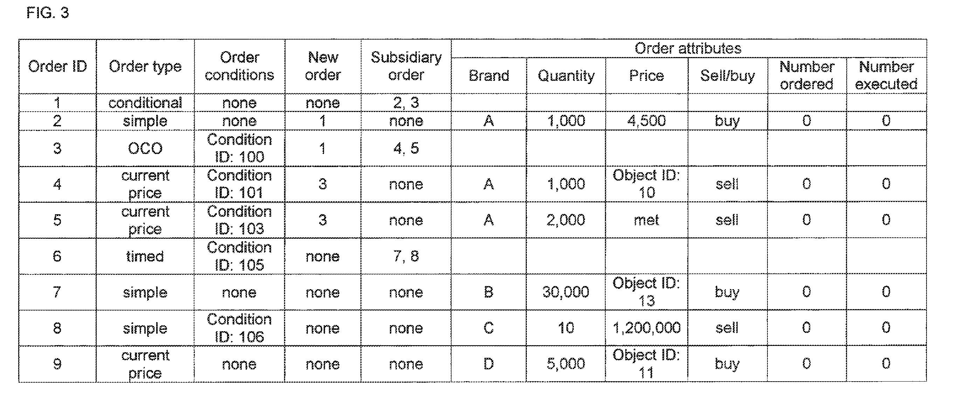

The order in FIG. 7, for example, is a conditional order and is thus composed of two order elements, and the second order element is a one-cancels-other order, which is also composed of two order elements. There are thus five order elements in FIG. 7. Order ID's are sequentially assigned to these order elements, starting with the top ranking order, and are stored in the order attribute memory means 6. The order ID assignment means 5 first assigns order ID "1" to the conditional order which is the uppermost order. Order ID "2" is then assigned to the simple order forming the conditional order of order ID "1," and order ID "3" is assigned to the one-cancels-other order. As the one-cancels-other order of order ID "3" has two current price condition orders, order ID "4" is assigned to the first current price condition order, and order ID "5" is assigned to the second current price condition order. These are stored in the order attribute memory means 6. FIG. 3 illustrates the order attribute memory means 6 (described below) in this state. Here, when the order ID's of the order elements in the hierarchy or structure are assigned, the hierarchy structure is followed depth-first, but any method may be used to follow the hierarchy.

When conditions apply to the order attributes, the order ID assignment means 5 stores data (condition ID) indicating that there are conditions for the relevant order in the order attribute memory means 6, and the order ID conditions are stored in the condition memory means 7.

In FIG. 7, no additions apply to the conditional order of order ID "1" or the simple order of order ID "2," and "NO" data indicating that there are no conditions is therefore stored in the area where conditions are stored in the order attribute memory means 6.

Meanwhile, because a condition of the one-cancels-other order of order ID "3" is the execution of the simple order of order ID "2" in the conditional order of order ID "1," data indicating that condition (condition ID "100" and the order condition) is stored in the condition memory means 7. The current price condition order of order ID "4" is conditional on the current price when the order is issued, and data indicating the condition (condition ID "101" and the order condition) is stored in the condition memory means 7. Data indicating the condition of monitoring the execution of order ID "4" (condition ID "102" and the condition) is also stored in the condition memory means 7. As there is also a condition in the current price condition order of order ID "5," data indicating that condition (condition ID "103" and the condition) is stored in the condition memory means 7. Data indicating the condition of monitoring the execution of order ID "5" (condition ID "104" and the condition) is also stored in the condition memory means 7.

Since order ID "3," which is a new order, is a one-cancels-other order, the execution of one of the current price condition orders of order ID "4" and order ID "5" cancels the other. It is therefore necessary to monitor whether either order is executed, and order ID "4" and order ID "5" are respectively monitored (condition ID "102" and condition ID "104").

The order attribute memory means 6 is a means for storing the order attributes of order elements, and stores order ID's assigned by the order ID assignment means 5, data indicating the type of order, data indicting whether or not there are any conditions, order attributes, order ID's indicating the structural relationship between order attributes, data on the number of orders issued, data on the number of orders executed, and the like. Data identifying the brand being bought or sold, the quantity bought or sold, buying or selling price, and buy or sell category are stored as order attributes. Here, when order attributes are pre-designated by an investor in calculating the buying or selling price, the price is stored, data indicating the outcome, if any, is stored, and when a price calculated by a pre-determined calculating method is used, data identifying the order definition object representing the code (including program or module) of the computer calculating method is stored as the object ID. FIG. 3 schematically illustrates the order attribute memory means 6.

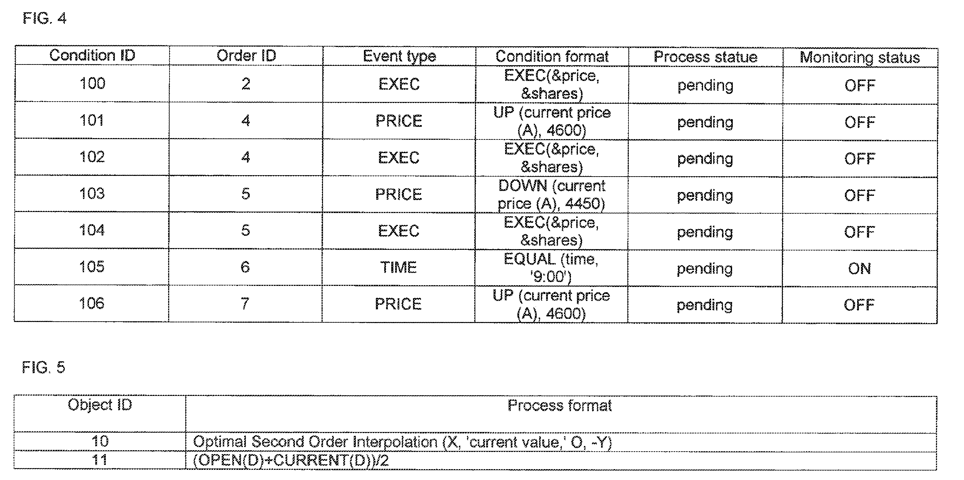

The condition memory means 7 is a means for storing conditions when conditions are added to the order attributes, and stores condition ID's identifying conditions, the processed status of conditions, monitored status, various condition formats, and the like. When data indicating that a condition has been established is stored, a process for issuing the order attributes of the order ID is carried out by the order issuing means 10 described below. FIG. 4 schematically illustrates the condition memory means 7 in its initial state. Condition ID's, order ID's, event types, condition formats, processing status, and monitoring status are stored in the condition memory means 7 illustrated in FIG. 4. An order ID is an order that is monitored, and an event type indicates the type of monitoring (whether to monitor for executions (EXEC), whether to monitor prices such as current price (PRICE), or whether to monitor times or dates (TIME)). Processing status "pending" means a condition is still pending, and "done" means a condition has taken effect. Monitoring status "OFF" means the event monitoring means 8 is not monitoring, and "ON" means the event monitoring means 8 is monitoring. A condition format indicates the monitoring condition; for example, "EXEC (&price &shares)" in order ID "100" is monitoring the executed price and executed number of a specified order. "UP (current price (A), 4600)" in condition ID "101" monitors whether the current price of brand A is at or over 4600 yen. "DOWN (current price (A), 4450)" monitors whether the current price of brand A is 4450 yen or lower.

In other words, condition ID "100" indicates that the execution of order ID "2" (executed price and executed number) is being monitored, condition ID "101" indicates that the current price of brand A in order ID "4" is being monitored to see if it is at or over 4,600 yen, condition ID "102" indicates that the execution of order ID "4" (executed price and executed number) is being monitored, condition ID "103" indicates that the current price of brand A in order ID "5" is monitored to see whether it is at or below 4,450 yen, and condition ID "104" indicates that the execution of order ID "5" (executed price and executed number) is being monitored. The condition formats given here are ultimately only examples; in the trading system 1, a variety of condition formats may be pre-established, they may be established as desired by investors, and the established condition formats may be received from investor terminals so as to be stored in the condition memory means 7.

The event monitoring means 8 is a means for monitoring whether or not conditions stored in the condition memory means 7 have taken effect. Examples of events include current price events, execution events, and date events. Current price events are when the current price of a product specified by conditions is received from the trading market system 2 or a system to which the current price of financial products or other products are submitted, and it is determined whether conditions are met by the current price of the brand specified by conditions. Execution events are when it is determined whether conditions have been met in cases where data stored in the order attribute memory means 6 indicates that other orders have been executed, such as the issuing of a subsequent order when a certain order has taken effect, as in conditional orders or the like. Time events are when a time or date is received from a certain timer device, and it is determined whether conditions have been met. These events are merely an example, and other events may be monitored.

In cases where it is determined that all the conditions for a certain order have been met in the event monitoring means 8, when they are order conditions, they are stored in the condition memory means 7, and an order ID and ordering instructions are transferred to the order issuing means 10. When the conditions are cancellation conditions, the relevant order stored in the order attribute memory means 6 is cancelled.

Furthermore, as in the prior art, undefined parameters or other condition formats may be established for the order time in the conditions for the condition format, and the event monitoring means 8 can monitor the current price events, execution events, time events, and the like of the conditions, so as to monitor whether or not conditions stored in the condition memory means 7 have been met, as described above, after the conditions have been defined.

The order issuing means 10 is a means for transmitting the order attributes and issuing orders to the trading market system 2 based on the order attributes stored in the order attribute memory means 6. When no data indicating that there are conditions (condition ID) in the order attributes has been stored, the order issuing means 10 issues the order attributes as such, and when data indicating that there are conditions has been stored, the order issuing means 10 issues the order attributes after data indicating that the conditions have taken effects is stored (or data indicating that the conditions have not taken effect is received from the event monitoring means 8).

When data indicating that an order definition object is included in the order attributes is stored in the order attribute memory means 6, the order issuing means 10 transfers an object ID for identifying the order definition object and instructions to process the object to the order attribute definition means 11, and issues an order after the order attributes have been defined upon receipt of the results after the order definition object process has been completed.

The order attribute definition means 11 is a means for receiving the order definition object or the object ID for the order definition object from the order issuing means 10 so as to process the order definition object on the trading system 1 or a certain server. The details of the process for the order definition object corresponding to the object ID are processed based on processing commands such as codes stored in the object memory means 9. The results of the process are transferred to the order issuing means 10.

An object ID uniquely identifying the order definition object is stored in a manner matched with the order definition object processing details or data in the object memory means 9. Here, the order definition object is stored by encoding the computer method for calculating at what price the order is issued and how many are issued, etc., as well as the data needed for the calculations (including the functions, class, and the like for carrying out the calculating method). An example of an order definition object is a "price calculation based on second order interpolation." FIG. 5 schematically illustrates the object memory means 9. Processing codes for "price calculations based on second order interpolation of price in the previous (Y seconds) for (brand X)" and the like are stored for the object ID "10" in the object memory means 9 of FIG. 5. The "Y seconds" for "brand X" used in the second order interpolation here may be obtained as a parameter from the order attribute definition means 11. Processing codes and the like for "calculating the initial price and mean current price" are stored for object ID "11." In addition to complex processing such as the "price calculation based on second order interpolation" above, a variety of forms involving the simple use of just "variables" or "numerical values" can be established for order definition objects. Order definition objects may also be preset by agents, or investors may themselves write code for processing order definition objects and store the code while matching the codes with object ID's in the object memory means 9.

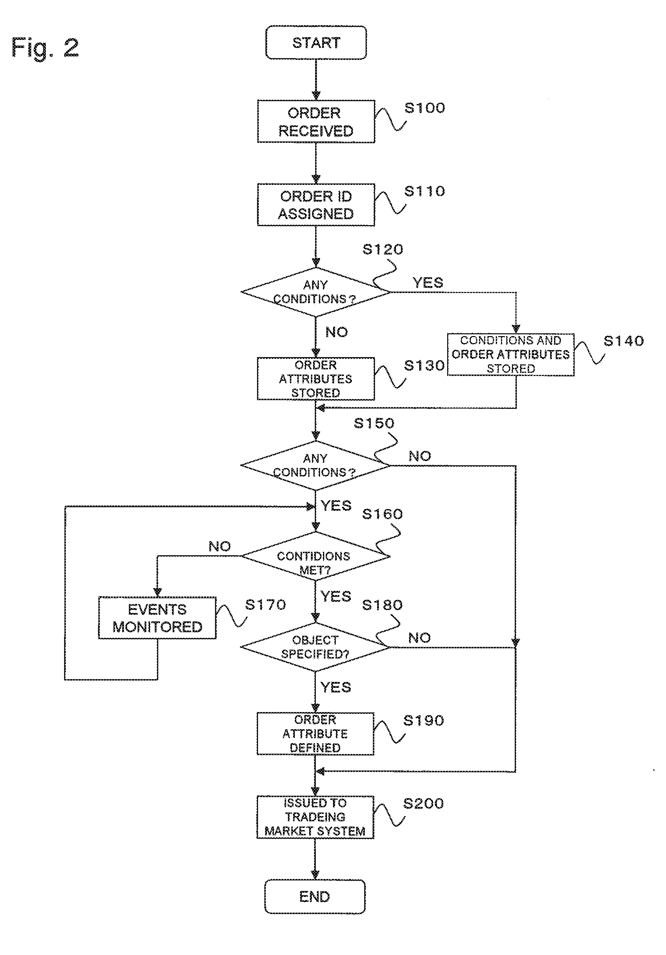

An example of a process for the trading system 1 of the invention is illustrated below by the flowchart in FIG. 2 and the schematic illustration of FIG. 1. The processing involved in the present invention in sending the order details in FIG. 7 from investor terminals 3 to the trading system 1 is also illustrated, but in actuality, a plurality of orders are simultaneously processed.

An investor first operates an investor terminal 3 to input buy and sell orders which are transmitted from the investor terminal 3 to the trading system 1. Here, the order is to first buy 1,000 shares of brand A at 4,500 yen, and to then sell (conditional order) 1,000 shares of brand A, when the current price of brand A is at or over 4,600 yen (current price condition order), at a price calculated by second order interpolation based on the price of brand A in the previous 15 seconds, or to sell 1,000 shares of brand A when the current price of brand A falls below 4,450 yen (current price condition order). Data on the details of the order as illustrated in FIG. 7 is then transmitted from the investor terminal 3 to the trading system 1. FIG. 8 hierarchically illustrates the order, where the orders are recursively processed by the trading system 1.

The order is received by the order receiving means 4 of the trading system 1 (S100). The order ID assignment means 5 then assigns order ID's (S110) uniquely identifying the structural elements of the order included in the order details received in S100, determines whether the order details include conditions (S120), and stores the order attributes as such (S130) in the order attribute memory means 6 if no conditions are included. If conditions are added to the order attributes (S120), the order ID assignment means 5 stores the order attributes in the order attribute memory means 6 and also stores the conditions in a manner matched with the order ID's in the condition memory means 7 (S140). The order attributes or conditions can be determined based on identifiers such as tags indicating the order type, conditions, or the like, which are included in the details of the order received from the inventors terminals 3.

An example of an order is illustrated in XML format in FIG. 7 to elucidate the order structure. It can be determined from the tag identifying the type of order that this order is composed of a conditional order including two order elements (simple order and one-cancels-other order), and that the once-cancels-other-order is composed of order elements that are two current price condition orders. It can thus be determined that there are five order elements. In other words, the uppermost (first layer) order is a conditional order, where a one-cancels-other order is issued by the execution of the simple order. When either of the orders in the second layer once-cancels-other order is executed, the other order is cancelled. When the conditions are met and a price is ordered, one of the two current price condition orders of the third layer forming the one-cancels-other order is executed, and the other is cancelled.

The order ID assignment means 5 assigns order ID's for the elements of the order structure. Order ID "1" is assigned to the first layer conditional order. In the second layer, order ID "2" is assigned to the simple order which is the first element of the conditional order. Since these orders have no tag indicating a condition (<condition>), it can be determined that there are no conditions. The order attributes of brand, price, quantity, and buy/sell category from tags indicating the brand (<brand>), tags indicating the price (<price>), and tags indicating the quantity (<quantity>) are stored as order attributes for order ID "2" in the order attribute memory means 6. At that time, the various order element types "conditional order" (order ID "1" order type) and "simple order" (order ID "2" order type) are stored.

In FIG. 3, for the convenience of description, the data is represented in the manner of database data entries, but data formats structured to hold the same data in memory, files, and databases may also be employed. The order attribute portions indicating actually issued order data may also be matched with the order ID's and represented and stored as separate date. The same applies to other types of data implemented as database tables.

Order ID "3" is assigned to the two order elements of the conditional order in the second layer, and the fact that this is a "one-cancels-other" order is stored as the order type. Here, the new order of order ID "3" is the conditional order of order ID "1," so it can be determined that a condition is for order ID "2" to take effect (based on the tag <conditional order> indicating a conditional order). The condition format for monitoring the execution of order ID "2" is therefore stored as condition ID "100" in the condition memory means 7. The existence of condition ID "100" is then stored in the order attribute memory means 6.

Order ID "4" and order ID "5" are assigned to the current price condition orders of the two order elements of the one-cancels-other order in layer 3. The order ID assignment means 5 determines that there is a condition based on an order condition tag (<condition>) for the order of order ID "4," and the data which indicates the existence of a condition in the order attribute memory means 6, as well as the conditions, are stored by the order ID assignment means 5 in the condition memory means 7. That is, the "current price of brand A at or over 4,600 yen" included in the condition tag (<condition>) is stored as a condition in a manner matched with order ID "4." This condition is condition ID "101." Based on the tag (<one-cancels-other order>) indicating the type of order of the new order (order ID "3") for order ID "4," the condition of monitoring the execution of order ID "4" is stored as condition ID "102."

Based on the tag (<action>) indicating an order process when the condition of order ID "4" is cleared, it is determined that the order price of the issued order is to be calculated using the order definition object for calculating the price of brand A in the previous 15 seconds, and the price is stored as a price attribute in the order attributes of order ID "4." Furthermore, when the order definition object is used as an attribute in the order attributes, although indicated by words in the present specification, it may actually be represented by reference to the object ID for identifying the order definition object, or to the object. In the case shown, the object ID of the order definition object for calculating the price of brand X by second order interpolation in the previous Y seconds was "10," and brand X and Y seconds were included as parameters in the order details and were also stored as part of the order definition object. For the convenience of explanation, the brand, quantity, and buying/selling categories were given in words in FIG. 7, but they may also be determined based on identifiers such as tags in the same manner as order ID "2," and may be determined from among <action> tags.

Order ID "5" is assigned to the second order element of the one-cancels-other order in layer 3, and the fact that it is a "current price condition order" is stored as the type of order. It is also determined that there is a condition based on an order condition tag (<condition>), and the data which indicates the existence of a condition in the order attribute memory means 6, in which the conditions are matched to the condition ID's in the condition memory means 7, as well as the conditions, are stored by the order ID assignment means 5 in the condition memory means 7. That is, the "current price of brand A at or below 4,450 yen" included in the condition tag (<condition>) is stored as a condition in a manner matched with order ID "5." This condition is condition ID "103." Based on the tag (<one-cancels-other order>) indicating the type of order of the new order (order ID "3") for order ID "5," the condition of monitoring the execution of order ID "5" is stored as condition ID "104."

Based on the tag (<action>) indicating an order process when the condition of order ID "5" is cleared, the order attributes for brand, price, and quantity in the "order to sell 1,000 shares of brand A when the order price takes effect" are stored as the order attributes of order ID "5" in the order attribute memory means 6.

FIG. 3 shows the order attribute memory means 6 with the order attributes of order ID "1" through order ID "5" stored in this manner, and FIG. 4 shows the condition memory means 7 with conditions stored. In the above examples, the conditions were stored after the order attributes had been stored, but they may also be stored in reverse or simultaneously.

When the order attributes are stored in this manner in the order attribute memory means 6, it is determined whether or not conditions have been specified in the order (S150), and the order issuing means 10 sends order data for orders with no specified conditions (S200) to the trading market system 2 if the trading market system 2 is in a time zone where orders are being accepted. In FIG. 3, order ID "1" has no specified conditions and is therefore processed first. However, to the extent that it has subsidiary orders, subsidiary order ID "2" and order ID "3" are then processed.

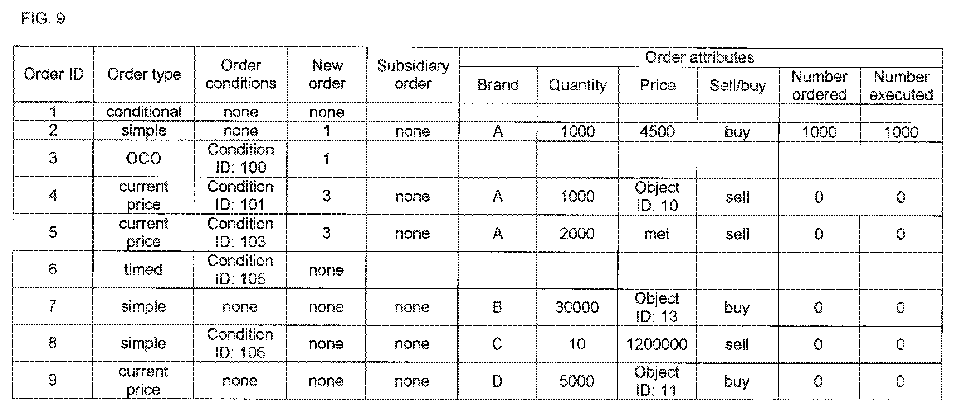

Because order ID "2" has no conditions stipulated in the order attribute memory means 6, the data for an order to "buy" "1,000" shares of brand "A" at a price of "4,500" is issued. After the order is issued, the data on the number ordered is stored in the relevant order ID. For example, the "number ordered" is changed to "1,000." In this way, after the order is issued, when notification that the order has been executed is received from the trading market system 2, the data on the relevant executed order ID is stored. For example, the "number ordered" is changed to "1,000." This is illustrated in FIG. 9.

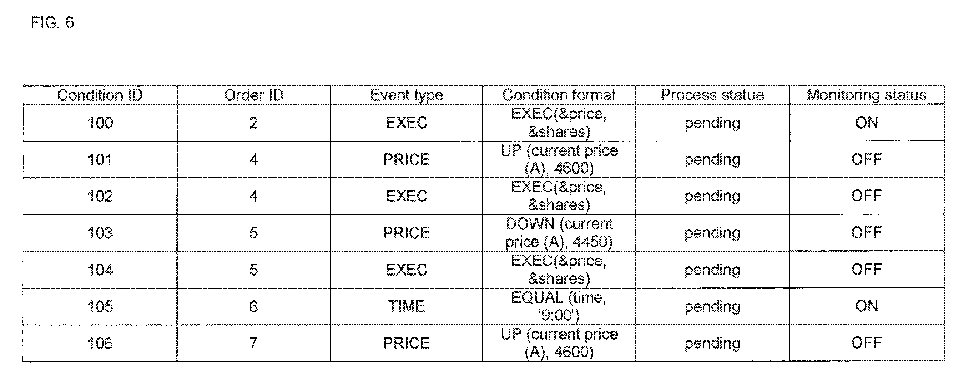

Meanwhile, parallel to the above, condition ID "100" is specified in the order attribute memory means 6 for order ID "3," and no process is therefore carried out until the condition is met. Also, because a condition is set for condition ID "100," the monitoring status for condition ID "100" in the condition memory means 7 is changed from "OFF" to "ON," and the event monitoring means 8 begins to monitor the condition. The condition memory means 7 in that state is shown in FIG. 6.

In this way, the event monitoring means 8 monitors (S160) whether or not conditions described in the condition memory means 7 have taken effect for orders with conditions (orders stored as "with conditions" in the condition memory means 7 and order attribute memory means 6). Current price events, execution events, and time events are examples of monitored events.

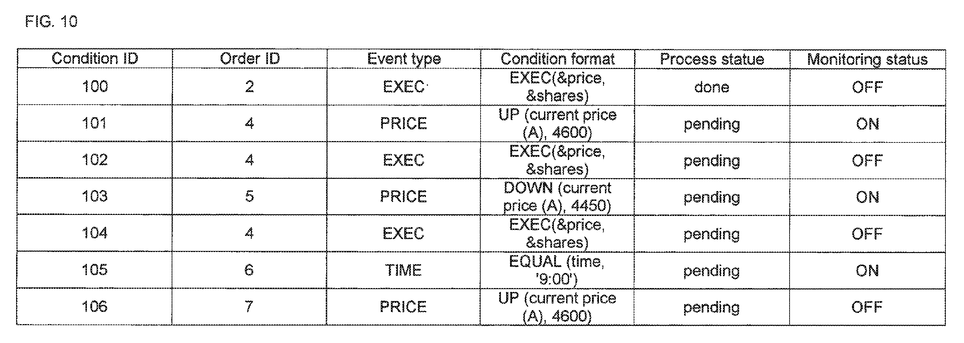

When order ID "2" is executed in the manner described above, the execution event monitoring will reveal that condition ID "100" of order ID "3" stored in the condition memory means 7 has taken effect. The event monitoring means 8 thus turns OFF the monitoring status for condition ID "100" of the condition memory means 7, and the processing status is updated as having been processed. The process for order ID "3" then starts. The order corresponding to order ID "3" is the second order element of the conditional order and is therefore processed, but to the extent that this too has a subsidiary order, order ID "4" and order ID "5," which are subsidiary orders of order ID "3," are processed. Here, in the order attribute memory means 6, condition ID "101" is a condition of order ID "4," and condition ID "103" is a condition of order ID "5." As such, until the conditions are met, order ID "4" and order ID "5" are not processed. Because condition ID "101" and condition ID "103" have been set, the monitoring status for condition ID "101" and "103" stored in the condition memory means 7 is switched on, and the event monitoring means 8 begins to monitor the conditions. For example, a condition memory means 7 such as the one shown in FIG. 6 is updated as shown in FIG. 10.

At this stage, because the conditions for order ID "4" and order ID "5" have not been cleared, the conditions are incomplete (S160), and events continue to be monitored by the event monitoring means 8 (S170).

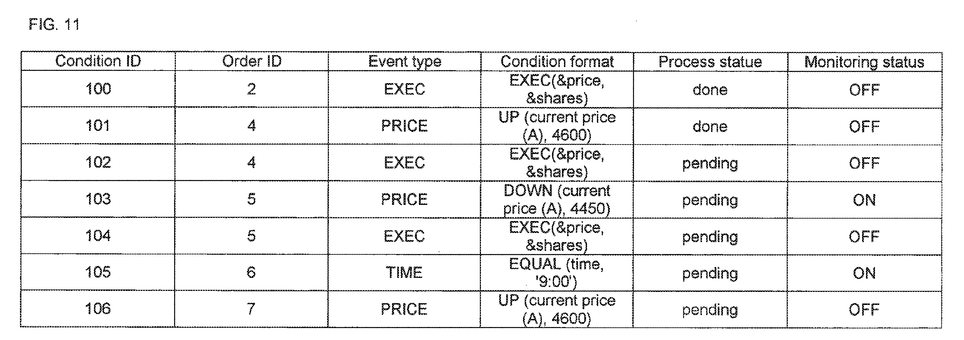

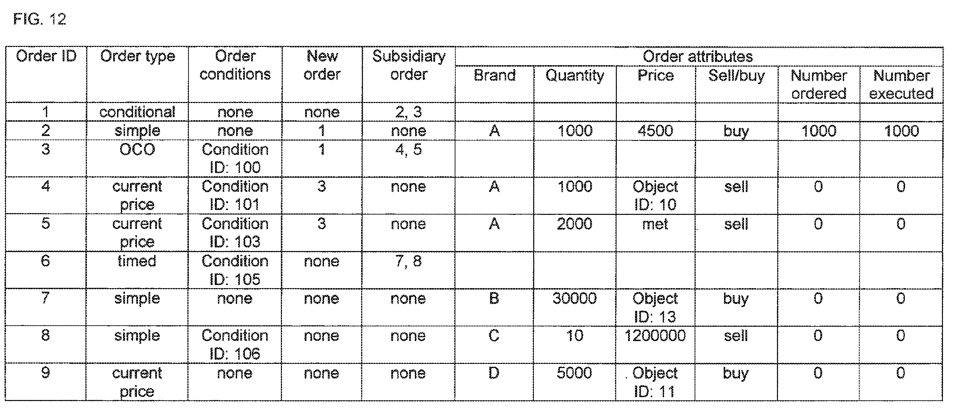

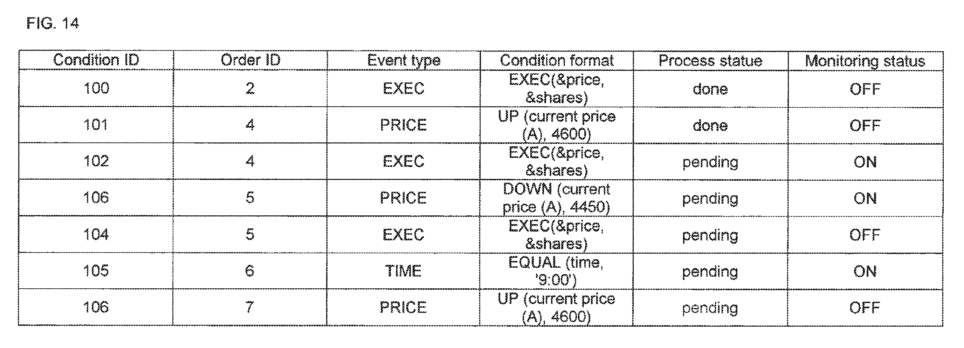

Assume, for example, that the continuous monitoring of events by the event monitoring means 8 reveals the current price of brand A to be 4,600 yen. When condition ID "101" for order ID "4" stored in the condition memory means 7 is met (the processing status is "done"), the event monitoring means 8 turns the monitoring status OFF and updates the condition memory means 7. FIG. 11 illustrates the condition memory means 7 in that state. With that, condition ID "102" is turned ON. FIG. 14 illustrates the condition memory means 7 in that state. When the condition stored in the condition memory means 7 is met, the event monitoring means 8 stores data indicating that the condition has been met for the relevant order ID stored in the order attribute memory means 6. Because the event monitoring means 8 has also determined that the current price condition of order ID "4" has been met (S160), instructions to issue order ID "4" are transferred to the order issuing means 10. FIG. 12 illustrates the order attribute means 6 in that state.

Because the order issuing means 10 receives instructions to issue order ID "4" from the event monitoring means 8, a determination is made as to whether or not an object ID is included in the order attributes of order ID "2" (that is, whether or not the order attributes are undefined) (S180), and if no object ID is included (if the order attributes are defined), the order is transmitted as such to the trading market system 2 (S200).

When, on the other hand, an object ID is included in the order attributes (the order attributes are undefined), the order issuing means 10 transfers the object ID, the parameter stored in the order attribute memory means 6, and instructions for processing the order definition object to the order attribute definition means 11. Here, "brand A" and "15 seconds" are transferred as object ID "10" and the parameter.

The order attribute definition means 11 that has received the object ID, the parameter stored in the order attribute memory means 6, and instructions for processing the order definition object searches the object memory means 9 based on the object ID to specify the order definition object that is to be processed, processes the order definition object (code for order definition object), and transfers the results. Here, because the object ID "10" is the order definition object for "calculating the price by second order interpolation of the price of (brand X) in the previous (Y seconds)" (parameters shown in parentheses) in the object memory means 9, the order definition object for "calculating the price by second order interpolation of the price of brand A in the previous 15 seconds" is processed. Thus, in this case, the order attribute definition means 11 obtains the price of brand A in the previous 15 seconds from a server to which certain prices are submitted, does the calculation based on second order interpolation, and then transfers the results to the order issuing means 10. "4,590 yen" is returned, for example. Because the price and quantity units which can be issued for each brand have also been specified, if the specified units are not available, the results may be returned to the order issuing means 10 upon performing approximation to the closest price and quantity, etc.

The order issuing means 10 that has received the processed results from the order attribute definition means 11 defines the order attributes at that point in time (S190), and on that basis issues orders to the trading market system 2 (S200). For example, a price of "4,590 yen" is received, and the order attributes of order ID "4" are thereby defined as brand "A," a quantity of "1,000," a price of "4,590," and "sell." Therefore, the price in the order attributes is updated to "4,590 yen," and the order issuing means 10 issues the order (S200). Also, when a plurality of order definition objects are included in one order attribute, each order definition object is processed, and the order is issued after the order attributes have been defined.

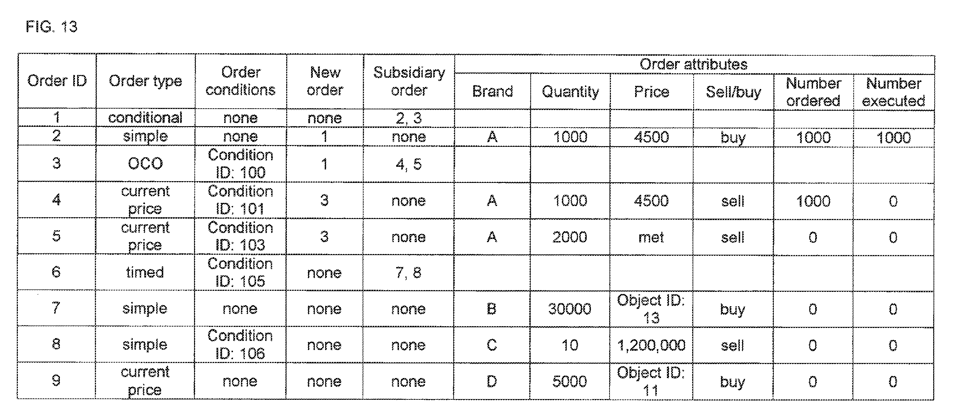

The data indicating the number of order ID "4" issued, which is stored in the order attribute memory means 6, is changed by the order issuing means 10 from "0" to "1,000" and stored. FIG. 13 illustrates this state.

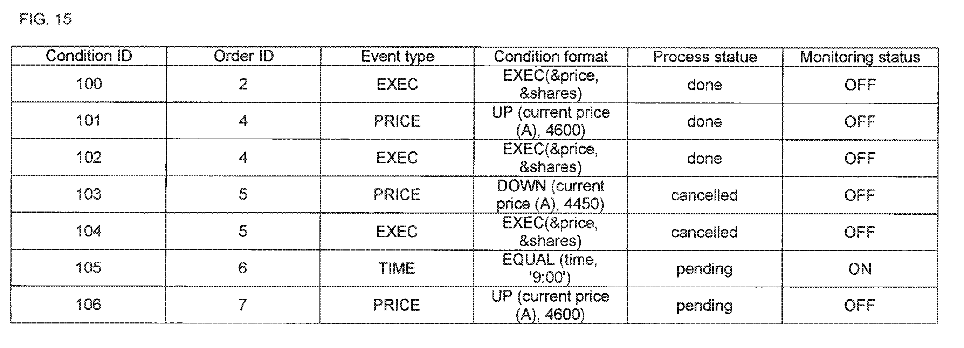

Condition ID "102" is met if the monitoring of executed events by the event monitoring means 8 reveals order ID "4" to have been executed. The event monitoring means 8 then updates the processing status of the condition ID "102" in the condition memory means 7 to "done" and the monitoring status to "OFF." Order ID "5" is the one-cancels-other order of order ID "3," and is canceled when order ID "4" takes effect. Data for canceling the condition ID "103" and condition ID "104" in the order attribute memory means 6 is thus stored in the condition memory means 7, and the monitoring status thereof is also updated to "OFF." FIG. 15 shows the condition memory means 7 in that state. Condition ID "103" may be met and order ID "5" may be issued as a result of price fluctuations before order ID "4" is executed. In that case, a command to cancel the order of order ID "5" is transmitted to the trading market system 2.

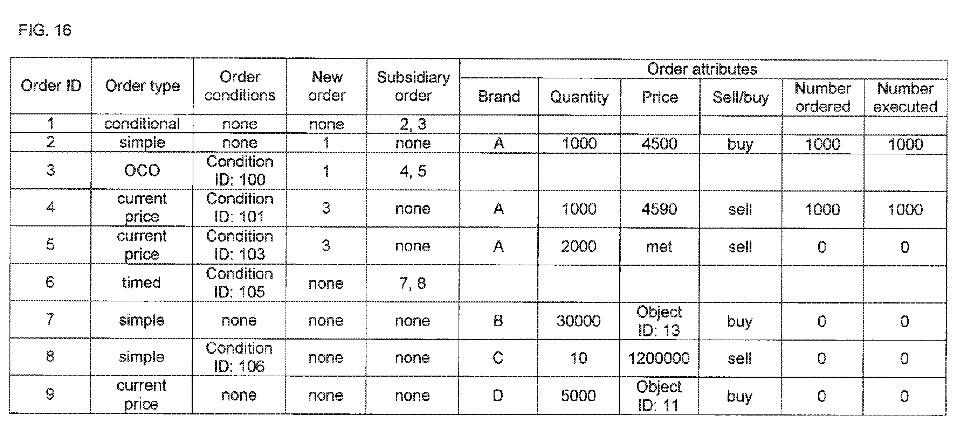

Because order ID "4" was executed, the number of times order ID "4" was executed in the order attribute memory means 6 is updated from "0" to "1,000" and stored. Because the new order "3" of order ID "4" is the one-cancels-other order of order ID "4" and order ID "5," data on the cancellation of order ID "5" is stored in the order attribute memory means 6, and the order is cancelled. FIG. 16 shows the order attribute memory means 6 in that state.

The one-cancels-other order illustrated above is processed when executed, but orders themselves also undergo the one-cancels-other process. That is, when an order is issued only when some condition has been met, as when the order elements of a one-cancels-other order are current price condition orders, if a certain number of shares are to be ordered from a certain order element, the other order element is cancelled in proportion to the order issued for all the shares of the order elements.

A process such as the above can be performed to carry out the order process shown in FIG. 7. Order attributes can be defined immediately before orders are issued, without order conditions and order attributes being defined at the stage where the variables are determined, such as in the past, ensuring better response to market conditions.

A variety of orders can also be handled because order definition objects can be handled.

The functions of the various means in the invention are only theoretically separated, and may physically or actually share the same space. Formats such as databases or data files, or processing memory space on a machine, may also be employed for the various memory means. The same copies of data may also be stored simultaneously in different memory areas of different machines.

The order definition objects in the order attributes stored in the order attribute memory 6 were processed by the trading system 1 in the above example, but object ID's for order definition objects may also be issued to the trading market system 2 while included as order attributes from the order issuing means 10 of the trading system 1. In such cases, the trading market system 2 may be equipped with functions corresponding to the order attribute definition means 11 and the object memory means 9 in the above example.

That is, order attributes including object ID's can be received from the trading system 1, so that order definition objects can be defined as values immediately before buy and sell orders are matched in the trading market system, thereby creating a system with even less time lag than in the above example.

In the case of the order attribute memory means 6 illustrated in FIG. 12, for example, the order issuing means 10 issues order attributes to the trading market system 2 after the order definition object (object ID "10") included in the order ID "4" has been defined as a value in the above example. That is, order ID "4" is issued after being defined, as in "buy 1,000 shares of brand A at 4,590 yen." However, the order issuing means 10 issues the order while the order definition object (object ID "10") is included in order ID "4." For example, the order issuing means 10 issues an order such as in "buy 1,000 shares of brand A at a price calculated with object ID '10'."

The trading market system 2 that has received the order attributes can be designed in such a way that object ID "10" is processed based on the object memory means 11 with which the trading market system 2 is equipped (that is, the price is calculated based on object ID "10"), and the price is then defined and matched in the trading market system 2. Also, the order definition objects instead of object ID's may be electronically transmitted to the trading market system 2.

### INDUSTRIAL APPLICABILITY

The present invention can be used to produce a trading system 1 in which order attributes are defined immediately before orders meeting order conditions are issued to a trading market system. Investors can thus be freed from the risk of not being able to respond sufficiently to market changes such as price fluctuations from the time variables are determined until order conditions are met, as was the case in the past. Investors can therefore make investments with better risk management than in the past.

The absence of risks resulting from time lag allows objects representing a variety of calculating methods to be established for order attributes, enables more diverse methods for calculating order attributes, and results in greater convenience for investors.

## Claims

1. A trading system for receiving buy and sell orders from investor terminals used by investors and placing the orders in a trading market system used by trading markets, said trading system comprising:
order receiving means for receiving buy and sell orders from the investor terminals;
means for storing order attributes of the received orders in order attribute memory means and for storing conditions, if the conditions are included in the orders, in condition memory means;
event monitoring means for monitoring at least one event among current price events, take-effect events, and time events, and determining whether conditions stored in the condition memory means have been met;
order issuing means for issuing, in the trading market system, order attributes defined on the basis of order attributes stored in the order attribute means for orders not including the conditions or orders that meet conditions in the orders; and
order attribute definition means for processing order definition objects for which are described order attribute-defining processes stored in object memory means when undefined order attributes are included in orders issued by the order issuing means, and returning the results to the order issuing means, wherein
the order issuing means transfers to the order attribute definition means the order definition object or an object ID for identifying the order definition object included in at least the undefined order attributes;
the order attribute definition means processes the order definition object obtained from the object memory means based on the given order definition object or object ID and returns the results to the order issuing means; and
the order issuing means receives the processed order definition object results and converts the undefined order attributes to the processed results, so that the order attributes that have been defined through the conversion of the order attributes to defined order attributes are issued to the trading market system.

2. The trading system according to claim 1, wherein:
the order ID assignment means specifies conditional order attributes and conditions based on identifiers included in the order.

3. The trading system according to claim 1, wherein:
the order issuing means determines that the order attributes are undefined when the order attributes include the object ID or order definition object, and determines that the order attributes are defined when the object ID or order definition object are not included.

4. The trading system according to claim 1, wherein:
the object is data or a code comprising data and one or more process commands.

5. A trading system for receiving buy and sell orders from investor terminals used by investors and placing the orders in a trading market system used by trading markets, said trading system comprising:
order receiving means for receiving buy and sell orders from the investor terminals;
order ID assignment means for assigning order ID's which are data specifying order elements for various order elements forming the buy and sell orders, storing, in order attribute memory means, information indicating conditions and order attributes of the order elements in a manner matched with the order ID's, and storing the conditions, when conditions are included in the order elements, in condition memory means in a manner matched with the order ID's;
event monitoring means for monitoring at least one event among current price events, take-effect events, and time events, and storing data, if any, to the effect that conditions stored in the condition memory means have been met;
order issuing means for extracting order attributes stored in the order attribute memory means based on the order ID's for orders with stored data indicating that conditions in the orders have been met or orders having no data indicating conditions in the order attribute memory means, and issuing defined order attributes in the trading market system; and
order attribute definition means for receiving the object ID's from the order issuing means when object ID's are included in the order attributes for orders issued by the order issuing means, processing order definition objects corresponding to the object ID's, and returning the results to the order issuing mean; wherein
the order issuing means determines whether an object ID is included in the order attributes corresponding to the order ID before an order is issued;
issues defined order attributes as such in the trading market system when no object ID is included; and
when an object ID is included, transfers at least the object ID to the order attribute definition means, receives the processed results for the order definition object corresponding to the object ID from the order attribute definition means, and converts the undefined order attributes to the processed results, so that the order attributes that have been defined through the conversion to defined order attributes are issued to the trading market system.

6. A trading method for performing a process by a computer which receives buying or selling orders from an investor terminal used by an investor and places the orders on a trading market system used by trading markets, wherein the computer performing the trading method
receives buy and sell orders from the investor terminal, stores the order attributes of the orders in order attribute memory means, and stores conditions in condition memory means if the conditions are included in the orders;
determines, when no condition are included in the orders, whether the order attributes stored in the order attribute memory means in the trading market system are defined order attributes;
issues orders with the defined order attributes to the trading market system when the order attributes are defined;
processes an order definition object specified by undefined order attributes, when the order attributes are undefined, to convert the undefined component of the undefined order attributes to the processed results for the order definition object, so that order attributes that have been defined through the conversion to defined order attributes are issued to the trading market system;
monitors at least one event among current price events, take-effect events, and time events, and determine whether conditions stored in the condition memory means have been met,
determines whether order attributes stored in the order attribute memory means for orders meeting all conditions in the order are defined order attributes;
issues orders with the defined order attributes in the trading market system when the order attributes are defined; and
process an order definition object specified by undefined order attributes, when the order attributes are undefined, to convert the undefined component of the undefined order attributes to the processed results for the order definition object, so that order attributes that have been defined through the conversion to defined order attributes are issued to the trading market system.

7. A trading market system for receiving orders with undefined order attributes from a trading system in which buy and sell orders are received from investor terminals used by investors, said trading market system comprising:
order attribute definition means for processing order definition objects for which are described processes related to undefined order attributes included in the order attributes, and converting the undefined order attributes to defined order attributes through conversion to the processed results; and
means for buying and selling by matching the defined order attributes with the defined order attributes of other orders.

8. A trading market system for receiving orders with undefined order attributes from a trading system in which buy and sell orders are received from investor terminals used by investors, said trading market system comprising:
object memory means for storing order definition objects, for which are described processes related to undefined order attributes included in the order attributes, in a manner matched with object ID's;
means for receiving undefined order attributes from the trading system;
order attribute definition means for processing order definition objects corresponding to object ID's based on the object ID's included in the undefined order attributes, and converting the undefined order attributes to defined order attributes through conversion to the processed results; and
means for buying and selling by matching the defined order attributes with the defined order attributes of other orders.
